Europäisches Patentamt

European Patent Office

Office européen des brevets

(11) Publication number: **0 245 935**
**A1**

# EUROPEAN PATENT APPLICATION

(21) Application number: 87302709.8

(51) Int. Cl.⁴: **G02F 1/133** , G02F 1/137

(22) Date of filing: 30.03.87

(30) Priority: **10.05.86 GB 8611476**

(43) Date of publication of application:
**19.11.87 Bulletin 87/47**

(84) Designated Contracting States:
**AT BE CH DE FR IT LI LU NL**

(71) Applicant: **English Electric Valve Company Limited**
**106, Waterhouse Lane**
**Chelmsford, Essex, CM1 2QU(GB)**

(72) Inventor: **Roe, Iain Hugh Cunningham**
**51 Mildmay Road**
**Chelmsford Essex(GB)**
Inventor: **Cadd, Paul Stephen**
**4 Great Cobb Springfield**
**Chelmsford Essex(GB)**

(74) Representative: **Rouse, David George et al**
**General Electric Company p.l.c. Central Patent Dept. (Chelmsford Office) Marconi Research Centre West Hanningfield Road Great Baddow Chelmsford Essex CM2 8HN(GB)**

(54) **Liquid crystal arrangements.**

(57) A double cell liquid crystal device is provided consisting of two overlying liquid crystal cells (I, 2), back-lit, separated by a polarising transflective member (3). The front one (I) of the two cells (I, 2) contains liquid crystal material (8) of the phase change type operating on the White-Taylor effect whilst the rear one (2) of the two cells contains liquid crystal material (II) of the dye nematic type.

EP 0 245 935 A1

## Improvements in or Relating to Liquid Crystal Arrangements

This invention relates to liquid crystal arrangements.

As compared to a single cell liquid crystal display device it is known that certain double cell devices consisting of two overlying liquid crystal cells having therebetween a transflection member can offer advantages in terms of contrast.

One object of the present invention is to provide improved such devices.

According to this invention a liquid crystal device is provided comprising two overlying liquid crystal cells separated by a transflective member, one of said two cells comprising liquid crystal material of the phase change type and the other of the non-phase change type.

Normally means will be provided for illuminating said device from the rear, the rearmost of said two cells being that comprising liquid crystal material of the non-phase change type.

Normally said transflective member is a polarising transflective member.

Preferably each cell comprises front and rear closure plates having liquid crystal material sealed in between the two, said transflective member being a discrete member being interposed betwen the rear closure plate of the foremost cell and the front closure plate of said rearmost cell.

Said liquid crystal material of the non-phase change type may for example essentially be liquid crystal material of the twisted nematic type, but preferably is of the dye nematic type.

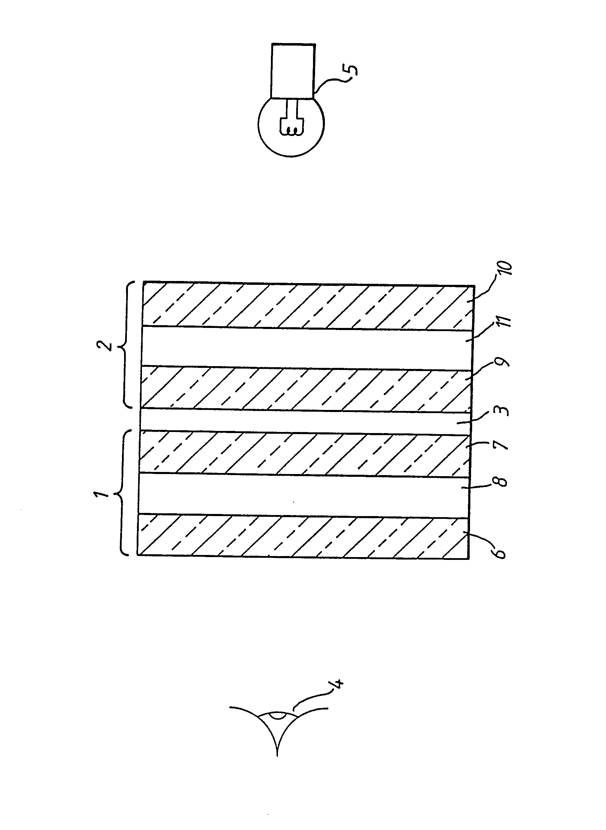

The invention is illustrated in and further described with reference to the accompanying drawing which illustrates schematically and in section one example of liquid crystal device in accordance with the present invention.

The device comprises two liquid crystal cells I,2 separated by a polarising transflective member 3. Cell I is the front or foremost cell viewed by an observer as represented by eye 4. Cell 2 is the rear or rearmost cell and is provided to be illuminated from the rear as represented by the bulb 5.

Cell I comprises transparent front and rear glass closure plates 6,7 with, in the space between them, liquid crystal material 8 of the phase change type operative on what is known as the "White-Taylor" effect.

Cell 2 comprises transparent front and rear glass closure plates 9,l0 with, in the space betwen them, liquid crystal material II of the dye nematic type operative on what is known as the Heilmeir effect.

Whilst not represented, the edges of the cells I,2 are sealed, to seal in the liquid crystal material, as usual.

Whilst not represented, the two cells I,2 have similar, overlapping, patterns of electrodes defining symbols which may be required to be displayed. Contrast to these is either by solid conductors or by elastomeric contacts, as known per se.

In operation, th degree of contrast which will be achieved may be improved compared to a single cell as with other forms of double cell arrangements. With a double cell device in accordance with the present invention however the contrast may be improved compared to a double cell arrangement in which both cells contain liquid crystal material of the phase change type since light passing through the double cell in accordance with the invention is subjected to more efficient polarisation and absorption effects from the dye nematic cell.

## Claims

I. A liquid crystal device comprising two overlying liquid crystal cells (I,2) separated by a transflective member (3), and wherein one (I) of said two cells comprising liquid crystal material (8) of the phase change type and the other (2) liquid crystal material (II) of the non-phase change type.

2. A device as claimed in claim I and wherein means are provided for illuminating said device from the rear, the rearmost of said two cells being that comprising liquid crystal material of the non-phase change type.

3. A device as claimed in claim I and wherein said transflective member is a polarising transflective member.

4. A device as claimed in claim I and wherein each cell comprises front and rear closure plates having liquid crystal material sealed in between the two, said transflective member being a discrete member being intrposed between the rear closure plate of the foremost cell and the front closure plate of said rearmost cell.

5. A device as claimed in claim I and wherein said liquid crystal material of the non-phase change type is of the dye nematic type.

## DOCUMENTS CONSIDERED TO BE RELEVANT

EP 87302709.8

| Category | Citation of document with indication, where appropriate, of relevant passages | Relevant to claim | CLASSIFICATION OF THE APPLICATION (Int. Cl 4) |
|---|---|---|---|
| A | GB - A - 2 129 954 (STANDARD TELE-PHONES) <br> * Fig. 1; page 1, lines 52-90; page 1, line 100 - page 2, line 51 * | 1,2 | G 02 F 1/133 <br> G 02 F 1/137 |
| A | GB - A - 2 160 328 (GENERAL ELEC-TRIC) <br> * Fig. 1; page 1, line 21 - page 2, line 8; page 3, lines 76-103 * | 1,2,4,5 | |
| A | US - A - 4 556 286 (UCHIDA et al.) <br> * Abstract; column 1, line 20 - column 2, line 19 * | 1,5 | |
| A | US - A - 3 645 604 (NGO) <br> * Fig. 2; column 1, lines 51-70; column 4, lines 42-50 * | 1 | **TECHNICAL FIELDS SEARCHED (Int. Cl.4)** <br><br> G 02 F <br> G 09 F |
| A | GB - A - 1 569 516 (KABUSHIKI) <br> * Fig. 1-3 * | 1,2,5 | |
| A | CH - A5 - 596 563 (KABUSHIKI) <br> * Column 1, line 24 - column 3, line 30 * | 1 | |

The present search report has been drawn up for all claims

| Place of search | Date of completion of the search | Examiner |
|---|---|---|
| VIENNA | 23-07-1987 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82